# EUROPEAN PATENT APPLICATION

(11) **EP 4 675 730 A1**
(43) Date of publication of application: **07.01.2026**
(21) Application number: 24892910.1
(22) Date of filing: 14.08.2024
(51) Int. Cl.: H01M 10/04, H01M 10/42

(54) **BATTERY, ELECTRIC DEVICE AND ENERGY STORAGE DEVICE**

(30) Priority: 24.11.2023 CN 202323180889 U
(71) Applicant: Contemporary Amperex Technology Co., Limited, Ningde, Fujian 352100 (CN)
(72) Inventor: BAI, Jingfeng, Ningde, Fujian 352100 (CN); SHEN, Dan, Ningde, Fujian 352100 (CN); LI, Yao, Ningde, Fujian 352100 (CN)
(74) Representative: Ziebig Hengelhaupt Intellectual Property Attorneys Patentanwaltskanzlei PartGmbB
(86) International application number: PCT/CN2024/111923
(87) International publication number: WO 2025/107747

(57) **Abstract**

Embodiments of the present application provide a battery, an electrical device, and an energy storage device, which can improve the service performance of the battery. The battery includes: a battery cell, a first wall of the battery cell being provided with a pressure relief mechanism; an attachment component, a first surface of the attachment component being attached to the first wall by an adhesive; an isolation component connected to the attachment component and configured to prevent the adhesive from being applied between the attachment component and the pressure relief mechanism; and a protective component connected to a surface of the isolation component facing away from the pressure relief mechanism to protect the isolation component; where the attachment component is provided with a first through hole corresponding to the position of the pressure relief mechanism.

## Description

### CROSS-REFERENCE TO RELATED APPLICATION

The present application claims priority to Chinese patent application 202323180889.X filed on November 24, 2023 and titled "BATTERY, ELECTRICAL DEVICE, AND ENERGY STORAGE DEVICE", which is incorporated herein by reference in its entirety.

### TECHNICAL FIELD

Embodiments of the present application relate to the field of battery technology, and in particular, to a battery, an electrical device, and an energy storage device.

### BACKGROUND

With the increasing severity of environmental pollution, the new energy industry is receiving more and more attention from people. The battery technology is an important factor related to the development of the new energy industry. In the development of the battery technology, in addition to improving the electric performance of batteries, safety is also an issue that cannot be ignored. If the safety of a battery cannot be guaranteed, the battery cannot be used, which reduces the service performance of the battery.

Therefore, it is an urgent technical problem to be solved in the field as to how to improve the service performance of a battery.

### SUMMARY

In view of this, embodiments of the present application provide a battery, an electrical device, and an energy storage device, which can improve the service performance of the battery.

In a first aspect, there is provided a battery, including: a battery cell, a first wall of the battery cell being provided with a pressure relief mechanism; an attachment component, a first surface of the attachment component being attached to the first wall by an adhesive; an isolation component connected to the attachment component and configured to prevent the adhesive from being applied between the attachment component and the pressure relief mechanism; and a protective component connected to a surface of the isolation component facing away from the pressure relief mechanism to protect the isolation component; where the attachment component is provided with a first through hole corresponding to the position of the pressure relief mechanism.

In an embodiment of the present application, through the provision that the protective component is connected to the surface of the isolation component facing away from the pressure relief mechanism, the protective component can protect the isolation component, to reduce the possibility of damage to the surface of the isolation component facing away from the pressure relief mechanism when subjected to vibration, impact, high temperature, or the like, thereby improving the service performance of the battery.

In some implementations, the protective component is located inside the first through hole. In this way, through the provision that the protective component is connected to the surface of the isolation component facing away from the pressure relief mechanism, and the protective component is located inside the first through hole, the isolation component can be protected to reduce the possibility of damage to the surface of the isolation component facing away from the pressure relief mechanism when subjected to vibration, impact, high temperature, or the like, to improve the service performance of the battery. Meanwhile, the structure has a simple design and is easy to install and disassemble.

In some implementations, the protective component is adhered to the inner wall of the first through hole to close the first through hole.

In an embodiment of the present application, through the provision that the protective component is connected to the surface of the isolation component facing away from the pressure relief mechanism, and the protective component is adhered to the inner wall of the first through hole to close the first through hole, the possibility of damage to the surface of the isolation component facing away from the pressure relief mechanism when subjected to vibration, impact, high temperature, or the like can be effectively reduced, thereby improving the service performance of the battery.

In some implementations, the protective component is connected to a second surface of the attachment component facing away from the pressure relief mechanism to close the first through hole.

In an embodiment of the present application, through the provision that the protective component is connected to the surface of the isolation component facing away from the pressure relief mechanism, and that the protective component is connected to a second surface of the attachment component facing away from the pressure relief mechanism, the sealing of the first through hole can be improved, to effectively reduce the possibility of damage to the surface of the isolation component facing away from the pressure relief mechanism when subjected to vibration, impact, high temperature, or the like, thereby improving the service performance of the battery.

In some implementations, the isolation component and the protection component are configured to be damaged by emissions from the battery cell when the pressure relief mechanism is actuated, so that the emissions are allowed to pass through the isolation component and the protection component.

In an embodiment of the present application, through the provision that the isolation component and the protection component are configured to be damaged by the emissions from the battery cell when the pressure relief mechanism is actuated so that the emissions are allowed to pass through the isolation component and the protection component, during the actuation of the pressure relief mechanism, the emissions discharged by the pressure relief mechanism can be smoothly discharged from the electrical cavity of the battery through the isolation component and the protective component, thereby reducing the thermal impact on the battery cell and improving the service performance of the battery.

In some implementations, the melting point of the protective component is higher than the melting point of the isolation component.

In an embodiment of the present application, through the provision that the protective component is connected to the surface of the isolation component facing away from the pressure relief mechanism, and the melting point of the protective component is set to be higher than the melting point of the isolation component, the possibility of damage to the surface of the isolation component facing away from the pressure relief mechanism when subjected to vibration, impact, high temperature, or the like can be reduced, thereby improving the service performance of the battery.

In some implementations, the protective component is made of one of the following materials: polypropylene, polycarbonate, polyethylene terephthalate, mica, glass fiber, ceramic fiber, or polyethylene epoxy resin. Thus, in an embodiment of the present application, through the provision that the material of the protective component is set to one of the following materials: polypropylene, polycarbonate, polyethylene terephthalate, mica, glass fiber, ceramic fiber, or polyethylene epoxy resin, the insulation performance, heat resistance and chemical stability of the protective component can be improved, the possibility of damage to the surface of the isolation component facing away from the pressure relief mechanism when subjected to vibration, impact, high temperature, or the like can be effectively reduced, thereby improving the service performance of the battery.

In some implementations, the isolation component is adhered to the first surface. Thus, in an embodiment of the present application, through the provision that the adhesive component is adhered to the first surface, the sealing of connection between the isolation component and the attachment component can be effectively improved, to reduce the impact of the adhesive entering the first through hole on the actuation performance of the pressure relief mechanism, thereby improving the service performance of the battery.

In some implementations, the isolation component is embedded in the first through hole, or the isolation component is adhered to the inner wall of the first through hole.

In an embodiment of the present application, through the provision that the isolation component is embedded in the first through hole, or the isolation component is adhered to the inner wall of the first through hole, the impact of the adhesive entering the first through hole on the actuation performance of the pressure relief mechanism can be effectively reduced, thereby improving the service performance of the battery.

In some implementations, the isolation component is provided with a first groove opening toward the battery cell, at least a part of a side wall of the first groove is located in the first through hole, and an outer edge of the first groove is connected to the side wall and is arranged between the first surface and the first wall.

In an embodiment of the present application, through the provision that the isolation component is provided with a first groove opening toward the battery cell, at least a part of a side wall of the first groove is located in the first through hole, and an outer edge of the first groove is connected to the side wall and is arranged between the first surface and the first wall, in the case where the attachment component is configured to be attached to the first wall by an adhesive, the adhesive can be effectively prevented from being applied between the attachment component and the pressure relief mechanism, and impact of the adhesive entering the pressure relief mechanism on the actuation performance of the pressure relief mechanism can be effectively reduced, thereby improving the service performance of the battery.

In some implementations, in a plane perpendicular to the thickness direction of the bottom wall of the first groove, the projection of the protective component covers the projection of the bottom wall of the first groove.

In an embodiment of the present application, through the provision that in a plane perpendicular to the thickness direction of the bottom wall of the first groove, the projection of the protective component covers the projection of the bottom wall of the first groove, the possibility of damage to the surface of the isolation component facing away from the pressure relief mechanism when subjected to vibration, impact, high temperature, or the like can be effectively reduced, thereby improving the service performance of the battery.

In some implementations, a surface of an outer edge of the first groove close to the first wall is provided with a second groove opening toward the battery cell.

In an embodiment of the present application, through the provision that a surface of an outer edge of the first groove close to the first wall is provided with a second groove opening toward the battery cell, to form a sealed cavity between the isolation component and the first wall in the case where the isolation component is attached to the first wall, the sealing between the isolation component and the battery cell is improved and the risk of the adhesive flowing from the gap between the isolation component and the first wall into the pressure relief mechanism is reduced, thereby reducing the impact on the actuation performance of the pressure relief mechanism and further improving the service performance of the battery.

In some implementations, the battery further includes a seal provided between an outer edge of the first groove and the first wall, and at least a part of the seal is received in the second groove.

In an embodiment of the present application, through the provision that a first seal is provided between an outer edge of the first groove and the first wall, and at least a part of the first seal is received in the second groove, the sealing between the isolation component and the battery cell can be further improved and the risk of the adhesive flowing from the gap between the isolation component and the first wall into the pressure relief mechanism can be effectively reduced, thereby reducing the impact on the actuation performance of the pressure relief mechanism and further improving the service performance of the battery.

In some implementations, a protrusion is provided on an outer edge of the first groove, the protrusion protrudes from the first surface and is arranged around the pressure relief mechanism, and the protrusion is used to prevent the adhesive from being applied between the attachment component and the pressure relief mechanism.

In an embodiment of the present application, through the provision that a protrusion is provided on an outer edge of the first groove, the protrusion protrudes from the first surface and is arranged around the pressure relief mechanism, and the protrusion is used to prevent the adhesive from being applied between the attachment component and the pressure relief mechanism, the risk of the adhesive flowing from the gap between the isolation component and the first wall into the pressure relief mechanism can be reduced, thereby reducing the impact on the actuation performance of the pressure relief mechanism and further improving the service performance of the battery.

In some implementations, the bottom wall of the first groove is provided with a weak region configured to be destructed by the emissions from the battery cell when the pressure relief mechanism is actuated, so that the emissions are allowed to pass through the weak region.

In an embodiment of the present application, through the provision that the bottom wall of the first groove is provided with a weak region configured to be destructed by the emissions when the pressure relief mechanism is actuated, that is, when the internal pressure or temperature of the battery cell reaches a threshold, the emissions can quickly pass through the weak region in time to realize rapid pressure relief of the battery cell, and the impact on the actuation performance of the pressure relief mechanism caused by the accumulation of the emissions in the first groove can be reduced, thereby improving the service performance of the battery.

In some implementations, the weak region satisfies at least one of the following conditions: the melting point of the material of the weak region is lower than the melting point of the material of the rest of the bottom wall of the first groove; the thickness of the weak region is smaller than the thickness of the rest of the bottom wall of the first groove; and the surface of the weak region perpendicular to the thickness direction of the bottom wall of the first groove is provided with a score.

In an embodiment of the present application, through the provision that the weak region satisfies at least one of the following conditions: the melting point of the material of the weak region is lower than the melting point of the material of the rest of the bottom wall of the first groove; the thickness of the weak region is smaller than the thickness of the rest of the bottom wall of the first groove; and the surface of the weak region perpendicular to the thickness direction of the bottom wall of the first groove is provided with a score, the weak region can be more easily destructed by the emissions of the battery cell than the rest of the bottom wall of the first groove, and when the internal pressure or temperature of the battery cell reaches a threshold, the emissions can quickly pass through the weak region in time to realize rapid pressure relief of the battery cell, and the impact on the actuation performance of the pressure relief mechanism caused by the accumulation of the emissions in the first groove can be reduced, thereby improving the service performance of the battery.

In some implementations, the attachment component includes a first attachment component and a second attachment component connected to each other, and a hollow inner cavity is formed between the first attachment component and the second attachment component.

In an embodiment of the present application, through the provision that the attachment component includes a first attachment component and a second attachment component connected to each other, and a hollow inner cavity is formed between the first attachment component and the second attachment component, the structural strength and impact resistance of the battery can be improved, thereby improving the service performance of the battery.

In some implementations, the hollow inner cavity is used to accommodate a fluid to regulate the temperature of the battery cell.

In an embodiment of the present application, through the provision that the hollow inner cavity formed between the first attachment component and the second attachment component is used to accommodate a fluid to regulate the temperature of the battery cell, the risk of thermal runaway of the battery cell can be reduced, thereby improving the service performance of the battery.

In a second aspect, there is provided an electrical device, including the battery described in any of the implementations of the first aspect, the battery being used to supply electric energy to the electrical device.

In some implementations, the electrical device may be a vehicle, a ship, a spacecraft, or the like.

In a third aspect, there is provided an energy storage device, including the battery described in any of the implementations of the first aspect, the battery being used to store electric energy for the energy storage device.

### BRIEF DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to these drawings without any creative effort.
FIG. 1 is a schematic structural view of a vehicle according to an embodiment of the present application;
FIG. 2 is a schematic structural view of a battery according to an embodiment of the present application;
FIG. 3 is a schematic structural view of a battery cell according to an embodiment of the present application;
FIG. 4 is a schematic structural view of a battery according to another embodiment of the present application;
FIG. 5 is a schematic sectional view of a battery according to an embodiment of the present application;
FIG. 6 is a partial schematic sectional view of a battery according to another embodiment of the present application;
FIG. 7 is a partial schematic sectional view of a battery according to another embodiment of the present application;
FIG. 8 is a partial schematic sectional view of a battery according to another embodiment of the present application;
FIG. 9 is a partial schematic sectional view of a battery according to another embodiment of the present application;
FIG. 10 is a schematic structural view of an isolation component according to an embodiment of the present application;
FIG. 11 is a partial schematic sectional view of a battery according to another embodiment of the present application;
FIG. 12 is a partial schematic sectional view of a battery according to another embodiment of the present application;
FIG. 13 is a partial schematic sectional view of a battery according to another embodiment of the present application;
FIG. 14 is a schematic sectional view of a battery according to another embodiment of the present application; and
FIG. 15 is a partial schematic sectional view of a battery according to another embodiment of the present application;

Description of the reference numerals: 1 - vehicle; 10 - battery; 20 - battery cell; 30 - controller; 40 - motor; 11 - box; 21 - shell; 22 - electrode assembly; 211 - case; 212 - cover plate; 213 - pressure relief mechanism; 221a - first tab; 222a - second tab; 214 - electrode terminal; 214a - positive electrode terminal; 214b - negative electrode terminal; 12 - box pressure relief valve; 13 - attachment component; 14 - isolation component; 15 - protective component; 216 - adhesive; 131 - first surface; 132 - first through hole; 133 - second surface; 140 - first groove; 141 - side wall; 142 - outer edge; 143 - bottom wall; 144 - protrusion; 150 - second groove; 16 - seal; 134 - first attachment component; 135 - second attachment component; 136 - hollow inner cavity.

The accompanying drawings are not drawn to actual scale.

### DETAILED DESCRIPTION

Implementations of the present application are described in further detail below in conjunction with the drawings and embodiments. The following detailed description of the embodiments and the drawings are used to illustrate the principles of the present application by way of example, but should not be used to limit the scope of the present application, that is, the present application is not limited to the described embodiments.

In the description of the embodiments of the present application, it should be noted that, unless otherwise stated, "a plurality of" means two or more. The orientation or positional relationships indicated by the terms "upper," "lower," "left," "right," "inner" and "outer" are only for the purposed of facilitating the description of the present application and simplifying the description, rather than indicating or implying that the apparatus or element referred to must have a particular orientation or be constructed and operated in a particular orientation, and therefore shall not be interpreted as limiting the embodiments of the present application. In addition, the terms such as "first," "second" and "third" are only for the purpose of description, and shall not be construed as indicating or implying relative importance. "Perpendicular" is not strictly perpendicular, but within the allowable range of errors. "Parallel" is not strictly parallel, but within the allowable range of errors.

Orientation words appearing in the following description all indicate directions shown in the drawings, and do not limit the specific structure of the present application. In the description of the embodiments of the present application, it should also be noted that, unless otherwise expressly specified and limited, the terms "mount," "interconnect," and "connect" should be broadly understood, for example, they may be a fixed connection or a detachable connection or be an integrated connection; or may be a direct connection or an indirect connection through an intermediate medium. For those of ordinary skill in the art, the specific meanings of the above terms in the embodiments of the present application may be understood according to specific circumstances.

In the embodiments of the present application, the term "and/or" is only an association relationship describing associated objects, which means that there may be three relationships. For example, A and/or B may represent the following three situations: presence of A, presence of A and B, and presence of B. In addition, the character "/" in the embodiments of the present application generally indicates that preceding and subsequent associated objects are in an "or" relationship.

Unless otherwise defined, all technical and scientific terms used in the embodiments of the present application have the same meanings as those commonly understood by those skilled in the art to which the present application belongs. The terms used in the specification of the present application are merely for the purpose of describing specific embodiments in the embodiments of the present application, but are not intended to limit the embodiments of the present application. The terms "include" and "have" and any variations thereof in the specification of the embodiments the present application and the claims as well as the above description of the drawings are intended to cover non-exclusive inclusions. The terms "first," "second," etc. in the specification of the embodiments of the present application and the claims as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the embodiments of the present application, the battery refers to a physical module that includes one or more battery cells to supply electric energy. For example, the battery mentioned in the present application may include a battery module, a battery pack, or the like. The battery generally includes a box for encapsulating one or more battery cells. The box can reduce the impact of liquid or other foreign matters on the charging or discharging of the battery cells.

It should be understood that the battery cell in the embodiments of the present application includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

In some implementations, the battery cell generally includes an electrode assembly. The electrode assembly comprises a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and can function to prevent a short circuit between the positive electrode and the negative electrode while enabling the active ions to pass through.

In some implementations, the positive electrode may be a positive electrode plate, and the positive electrode plate may include a positive electrode current collector and a positive electrode active material arranged on at least one surface of the positive electrode current collector.

For example, the positive electrode current collector has two surfaces opposite to each other in the thickness direction thereof, and the positive electrode active material is arranged on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. In some implementations, other conventional materials that may be used as positive electrode active materials for batteries may also be used. These positive electrode active materials may be used alone or in combination of two or more thereof. Examples of the lithium-containing phosphate may include, but are not limited to, at least one of lithium iron phosphate (e.g., LiFePO₄(also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite.

As an example, the positive electrode active material may include at least one of a sodium transition metal oxide, a polyanionic compound, and a Prussian blue compound.

In some implementations, the sodium transition metal oxide may be a doping-modified sodium transition metal oxide, and the doping modification of the sodium transition metal oxide may include at least one of sodium site doping modification, oxygen site doping modification, transition metal site doping modification, and surface coating modification.

In some implementations, a foam metal may be used as the positive electrode. The foam metal may be foam nickel, foam copper, foam aluminum, foam alloy, foam carbon, or the like. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some implementations, the negative electrode may be a negative electrode plate, and the negative electrode plate may include a negative electrode current collector.

As an example, a metal foil, a foam metal, or a composite current collector may be used as the negative electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver and silver alloy, etc.) on a polymer material substrate (such as substrate of polypropylene, polyethylene terephthalate, polybutylene terephthalate, polystyrene, polyethylene, etc.).

In some implementations, the battery cell in the embodiments of the present application may be a negative-electrode-free sodium secondary battery.

A negative-electrode-free sodium secondary battery refers to a battery cell in which a negative electrode active material layer is not actively provided on the negative electrode side during the manufacturing process of the battery cell. For example, a sodium metal or carbonaceous active material layer is not provided at the negative electrode through a coating or deposition process to form a negative electrode active material layer during the manufacturing process of the battery cell. During the first charge, sodium ions gain electrons on the anode side to be deposited on the surface of the current collector to form a sodium metal phase. During discharge, the metallic sodium can be converted into sodium ions and return to the positive electrode, thus achieving cyclic charge and discharge. Compared with other sodium secondary batteries, negative-electrode-free sodium secondary battery cells can achieve higher energy density since they have no negative electrode active material layer.

In some implementations, in order to improve the performance of battery cells, some functional coatings, such as carbonaceous materials, metal oxides, alloys, etc., can be provided on the negative electrode side of the negative electrode-free sodium secondary battery to improve the conductivity of the negative electrode current collector and improve the uniformity of the deposited sodium metal.

In some implementations, the material of the positive electrode current collector may be aluminum, and the material of the negative electrode current collector may be copper.

In some implementations, the electrode assembly further comprises a separator provided between the positive electrode and the negative electrode.

In some implementations, the separator is a separator film. The embodiments of the present application have no particular limitation on the type of the separator film, and any well-known porous structure separator film with good chemical stability and mechanical stability can be used.

As an example, the main material of the separator film may be selected from at least one of glass fiber, non-woven fabric, polyethylene, polypropylene, polyvinylidene fluoride, and ceramic.

In some implementations, the separator is a solid electrolyte. The solid electrolyte is arranged between the positive electrode and the negative electrode, and functions to transport ions and isolate the positive electrode from the negative electrode.

In some implementations, the battery cell further includes an electrolyte that functions to conduct ions between the positive electrode and the negative electrode. There is no specific limitation on the type of electrolyte in the embodiments of the present application, and the electrolyte can be selected according to the requirement. The electrolyte may be liquid, gel or solid.

In some implementations, the electrode assembly is a wound structure. The positive electrode plate and the negative electrode plate are wound into the wound structure.

In some implementations, the electrode assembly is a stacked structure. As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of separators may be provided and arranged between any adjacent positive electrode plates or negative electrode plates.

For example, the separator may be continuously arranged between any adjacent positive electrode plates or negative electrode plates by folding or winding.

In some implementations, the electrode assembly may be cylindrical, flat or multi-prism-shaped, or the like.

In some implementations, the electrode assembly is provided with tabs that can conduct current out of the electrode assembly. The tabs include a positive tab and a negative tab.

In some implementations, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

In order to meet different power requirements, the battery in the embodiments of the present application may include a plurality of battery cells. The plurality of battery cells may be connected in series, in parallel, or in parallel-series connection. The parallel-series connection refers to a combination of series connection and parallel connection. In some implementations, the plurality of battery cells may be connected in series, parallel or parallel-series connection to form battery modules first, and then the plurality of battery modules may be connected in series, parallel or parallel-series connection to form the battery. That is, the plurality of battery cells may directly form a battery, or may first form a battery module, and then, the battery modules form a battery. The battery is further arranged in an electrical device to provide electrical energy for the electrical device.

In some implementations, the battery in the embodiments of the present application may be a battery module, and when a plurality of battery cells are provided, the plurality of battery cells are arranged and fixed to form a battery module.

In some implementations, the battery in the embodiments of the present application may be a battery pack. The battery pack includes a box and a battery cell. The battery cell or the battery module is accommodated in the box.

In some implementations, the box in the embodiments of the present application may be a part of a chassis structure of a vehicle. For example, a part of the box may become at least a part of a floor of the vehicle, or a part of the box may become at least a part of a cross beam and a longitudinal beam of the vehicle.

With the increasing severity of environmental pollution, the new energy industry is receiving more and more attention from people. The battery technology is an important factor related to the development of the new energy industry. In the development of the battery technology, in addition to improving the electric performance of batteries, safety is also an issue that cannot be ignored. If the safety of a battery cannot be guaranteed, the battery cannot be used, which reduces the service performance of the battery. At present, during the installation and manufacturing process of the battery, it is necessary to adhere the battery cell and the box to each other. If the adhesive overflows to the position of the pressure relief mechanism of the battery cell, the actuation performance of the pressure relief mechanism will be affected, thereby reducing the service performance of the battery. Therefore, it is an urgent technical problem to be solved in the field as to how to improve the service performance of a battery.

In view of this, an embodiment of the present application provides a battery, comprising: a battery cell, a first wall of the battery cell being provided with a pressure relief mechanism; an attachment component, a first surface of the attachment component being attached to the first wall by an adhesive; an isolation component connected to the attachment component and configured to prevent the adhesive from being applied between the attachment component and the pressure relief mechanism; and a protective component connected to a surface of the isolation component facing away from the pressure relief mechanism to protect the isolation component. In this way, through the provision that the protective component is connected to the surface of the isolation component facing away from the pressure relief mechanism, the protective component can protect the isolation component, to reduce the possibility of damage to the surface of the isolation component facing away from the pressure relief mechanism when subjected to vibration, impact, high temperature, or the like, thereby improving the service performance of the battery.

The technical solutions described in the embodiments of the present application are all applicable to various electrical devices using batteries. For example, the electrical devices may be vehicles, mobile phones, portable devices, laptops, ships, spacecrafts, electric toys, electric tools, and the like. The vehicles may be fuel vehicles, gas vehicles or new energy vehicles, and the new energy vehicles may be all-electric vehicles, hybrid electric vehicles, extended range electric vehicles, and the like. The spacecrafts include airplanes, rockets, space shuttles, spaceships, and the like. The electric toys include fixed or mobile electric toys, such as game consoles, electric vehicle toys, electric ship toys and electric airplane toys. The electric tools include metal cutting tools, grinding electric tools, assembly electric tools and railway electric tools, such as electric drills, electric grinders, electric wrenches, electric screw drivers, electric hammers, electric impact drills, concrete vibrators and electric planers.

It should be understood that the technical solutions described in the embodiments of the present application are not only applicable to the electrical devices described above, but also applicable to all devices using batteries. However, for the sake of brevity, the following embodiments are described in detail by taking a vehicle as the electrical device as an example.

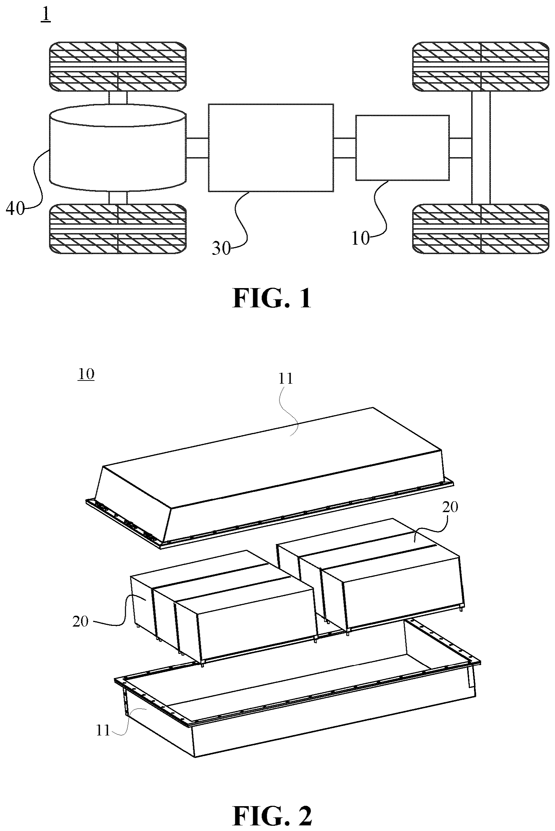

For example, as shown in FIG. 1, a schematic structural view of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. A motor 40, a controller 30 and a battery 10 may be provided inside the vehicle 1, and the controller 30 is used to control the battery 10 to supply power to the motor 40. For example, the battery 10 may be arranged at the bottom or the head or the tail of the vehicle 1. The battery 10 may be used to supply power to the vehicle 1. For example, the battery 10 may be used as an operating power source of the vehicle 1, which is used for a circuit system of the vehicle 1. As another example, the battery 10 may be used for operation power requirements of the vehicle 1 during starting, navigation and running. In some implementations of the present application, the battery 10 may not only be used as the operating power source of the vehicle 1, but also as a driving power source of the vehicle 1 to replace or partially replace fuel or natural gas to provide driving power for the vehicle 1.

In order to meet different use power requirements, the battery 10 in the embodiments of the present application may include at least one group of battery cells, and the group of battery cells includes a plurality of battery cells, where the plurality of battery cells may be connected in series, parallel, or series-parallel connection to form the battery 10, where the series-parallel connection refers to a combination of series connection and parallel connection. The battery 10 may also be called a battery pack. For example, the plurality of battery cells may be connected in series, parallel or parallel-series connection to form battery modules first, and then the plurality of battery modules may be connected in series, parallel or parallel-series connection to form the battery 10. That is, the plurality of battery cells may directly form the battery 10, or may form battery modules first, and then the battery modules form the battery 10.

In some implementations, the battery 10 may include a plurality of battery cells 20. For example, as shown in FIG. 2, which is a schematic structural view of a battery 10 according to an embodiment of the present application, the battery 10 may include a plurality of battery cells 20. The battery 10 may further include a box 11, the box 11 is of a hollow structure inside, and the plurality of battery cells 20 are accommodated in the box 11. For example, the plurality of battery cells 20 are placed in the box 11 after being connected in parallel or in series or in series-parallel combination.

In some implementations, the battery 10 may further include other structures, which will not be described here. For example, the battery 10 may further include a bus component, and the bus component is used to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through a conductive mechanism penetrating the box. Optionally, the conductive mechanism can also be a bus component.

In the embodiments of the present application, the number of battery cells 20 may be set to any value depending on different power requirements. The plurality of battery cells 20 may be connected in series connection, parallel connection or series-parallel connection to achieve a larger capacity or power. Each battery 10 may include a large quantity of battery cells 20, and therefore, in order to facilitate installation, the battery cells 20 may be arranged in groups, and each group of battery cells 20 forms a battery module. The number of the battery cells 20 included in the battery module is not limited and may be set according to the requirements. The battery 10 may include a plurality of battery modules, and the battery modules may be connected in series, in parallel or in series-parallel combination.

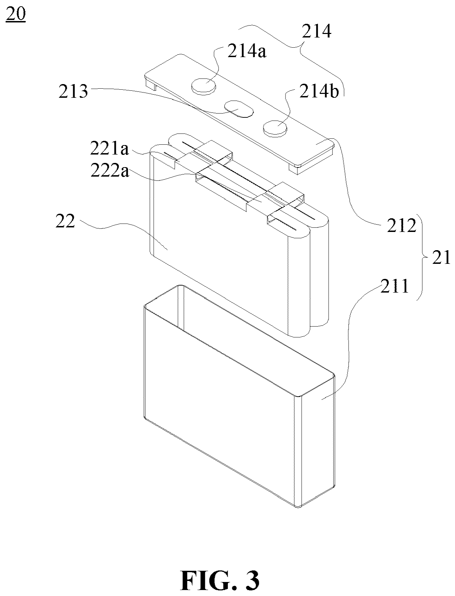

As shown in FIG. 3, which is a schematic structural view of a battery cell 20 according to an embodiment of the present application, the battery cell 20 includes one or more electrode assemblies 22, a case 211, and a cover plate 212. The case 211 and the cover plate 212 form a shell 21 or a battery casing. The wall of the case 211 and the cover plate 212 are both called the wall of the battery cell 20. For a cuboid-shaped battery cell 20, the wall of the case 211 includes a bottom wall and four side walls. The case 211 is configured based on the shape of one or more electrode assemblies 22 combined together. For example, the case 211 may be a hollow cuboid, cube, or cylinder, and one of the faces of the case 211 has an opening to allow the one or more electrode assemblies 22 to be placed inside the case 211. For example, when the case 211 is a hollow rectangular prism or cube, one of the flat planes of the case 211 serves as the open face, meaning that this plane does not have a wall body, allowing the interior and exterior of the case 211 to communicate with each other. When the case 211 may be a hollow cylinder, the end surface of the case 211 is the open face, meaning that this end surface does not have a wall body, allowing the interior and exterior of the case 211 to communicate with each other. The cover plate 212 covers the opening and is connected to the case 211 to form a closed cavity in which the electrode assembly 22 is placed. The case 211 is filled with an electrolyte, such as an electrolytic solution.

The battery cell 20 may further comprise two electrode terminals 214, and the two electrode terminals 214 may be provided on the cover plate 212. The cover plate 212 is generally in the shape of a flat plate, and the two electrode terminals 214 are fixed to a flat plate surface of the cover plate 212. The two electrode terminals 214 are a positive electrode terminal 214a and a negative electrode terminal 214b, respectively. Each electrode terminal 214 is correspondingly provided with a connecting member, also called a current collecting member, which is located between the cover plate 212 and the electrode assembly 22 and used to electrically connect the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab.

In the battery cell 20, a single assembly 22 or a plurality of electrode assemblies 22 may be arranged according to actual usage requirements. As shown in FIG. 3, two independent electrode assemblies 22 are arranged in the battery cell 20.

A pressure relief mechanism 213 may further be provided on the battery cell 20. The pressure relief mechanism 213 is used to be actuated to relieve the internal pressure or heat when the internal pressure or temperature of the battery cell 20 reaches a threshold.

The pressure relief mechanism 213 may have various possible pressure relief structures. For example, the pressure relief mechanism 213 may be a temperature-sensitive pressure relief mechanism, and the temperature-sensitive pressure relief mechanism is configured to be capable of being melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being ruptured when the internal air pressure of the battery cell 20 provided with the pressure relief mechanism 213 reaches a threshold.

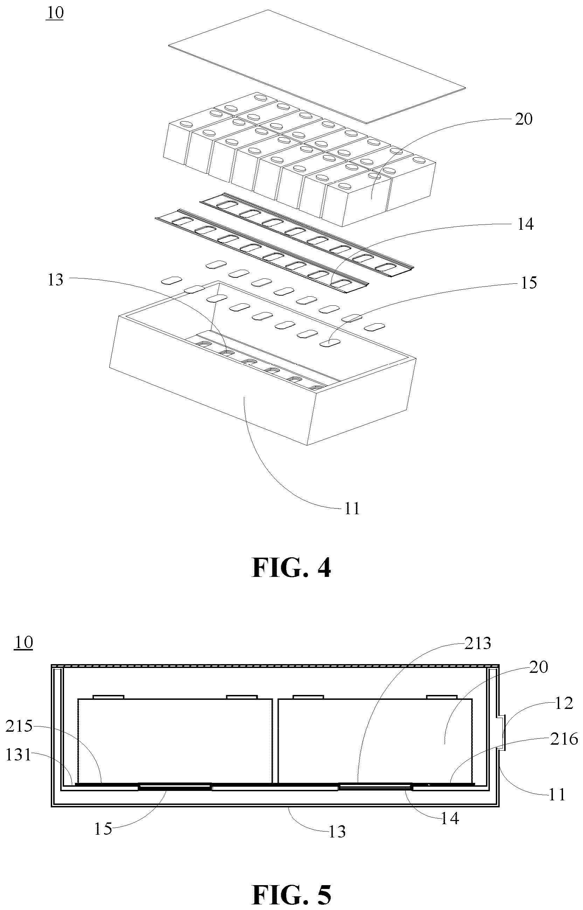

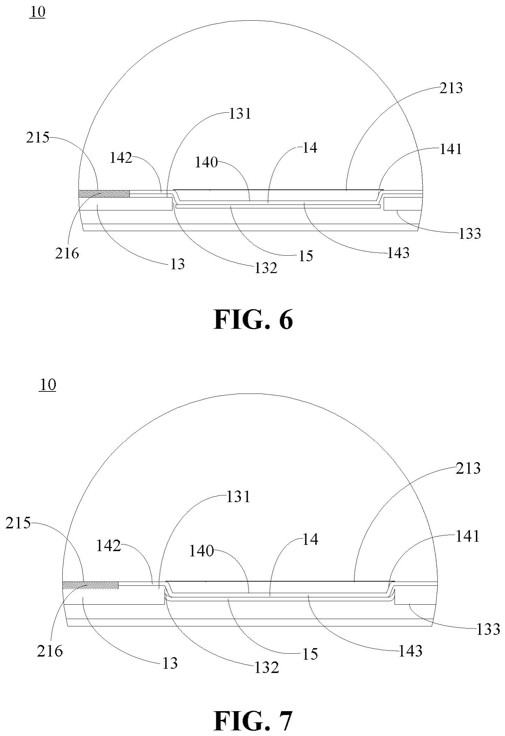

FIG. 4 shows a schematic structural view of a battery 10 according to another embodiment of the present application. FIG. 5 shows a schematic sectional view of a battery 10 according to another embodiment of the present application. FIG. 6 shows a partial schematic sectional view of a battery 10 according to another embodiment of the present application. For example, FIG. 5 may be a schematic sectional view of a corresponding portion of the battery 10 in FIG. 4, and FIG. 6 may be an enlarged schematic sectional view of a corresponding portion of the battery 10 in FIG. 4 or FIG. 5.

In some implementations, as shown in FIGS. 4 to 6, the battery 10 includes a battery cell 20, an attachment component 13, an isolation component 14 and a protective component 15. A first wall 215 of the battery cell 20 is provided with a pressure relief mechanism 213, a first surface 131 of the attachment component 13 is attached to the first wall 215 by an adhesive 216, the isolation component 14 is connected to the attachment component 13 and configured to prevent the adhesive 216 from being applied between the attachment component 13 and the pressure relief mechanism 213, and the protective component 15 is connected to a surface of the isolation component 14 facing away from the pressure relief mechanism 213 to protect the isolation component 14.

It should be understood that the first wall 215 in the embodiments of the present application may be any wall of the battery cell 20. For example, the first wall 215 includes but is not limited to the following examples: the first wall 215 may be the wall with the smallest area of the battery cell 20; the first wall 215 may also be the wall with the largest area of the battery cell 20; the first wall 215 may be the wall of the battery cell 20 on which the electrode terminal 214 is provided; the first wall 215 may be the wall adjacent to the wall of the battery cell 20 on which the electrode terminal 214 is provided; and the first wall may be the wall opposite to the wall of the battery cell 20 on which the electrode terminal 214 is provided.

It should also be understood that in the embodiments of the present application, the adhesive 216 used to adhere the attachment component 13 to the first wall 215 includes but is not limited to polyurethane adhesive, acrylic adhesive, and silicone rubber adhesive.

It should also be understood that in the embodiments of the present application, the isolation component 14 and the attachment component 13 can be adhesively connected. For example, the isolation component 14 and the attachment component 13 can be connected by the adhesive 216.

It should also be understood that in the embodiments of the present application, the protective component 15 and the isolation component 14 can be adhesively connected. For example, the protective component 15 and the isolation component 14 can be connected by the adhesive 216.

It should also be understood that in the embodiments of the present application, as shown in FIG. 5, a box pressure relief valve 12 is provided on the surface of the side wall of the box 11 of the battery 10 away from the interior of the box 11. The box pressure relief valve 12 is used to release the high-pressure and high-temperature gas generated during the pressure relief process when the pressure relief mechanism 213 of the battery cell 20 is actuated, so as to reduce the thermal impact on the battery cell 20 and improve the service performance of the battery 10.

In an embodiment of the present application, through the provision that the protective component 15 is connected to the surface of the isolation component 14 facing away from the pressure relief mechanism 213, the protective component 15 can protect the isolation component 14, to reduce the possibility of damage to the surface of the isolation component 14 facing away from the pressure relief mechanism 213 when subjected to vibration, impact, high temperature, or the like, thereby improving the service performance of the battery 10.

In some implementations, as shown in FIGS. 5 and 6, the attachment component 13 is provided with a first through hole 132 corresponding to the position of the pressure relief mechanism 213.

It should be understood that in the embodiments of the present application, the shape of the first through hole 132 in the direction perpendicular to the thickness of the attachment part 13 can be set according to actual needs. For example, the shape of the first through hole 132 can be set according to the shape of the pressure relief mechanism 213 of the battery cell 20. By way of example, the shape of the first through hole 132 includes but is not limited to a circle, an ellipse, a rectangle, and a regular polygon.

It should also be understood that in the embodiments of the present application, the expression that the attachment component 13 is provided with a first through hole 132 corresponding to the position of the pressure relief mechanism 213 means that the orthographic projection of the first through hole 132 in the plane perpendicular to the thickness direction of the attachment component 13 may be greater than, less than or equal to the orthographic projection of the pressure relief mechanism 213 in the plane perpendicular to the thickness direction of the attachment component 13.

In the embodiments of the present application, through the provision that the attachment component 13 is provided with a first through hole 132 corresponding to the position of the pressure relief mechanism 213, when the pressure relief mechanism 213 of the battery cell 20 is actuated, the emissions discharged by the pressure relief mechanism 213 can be smoothly discharged from the electrical cavity through the first through hole 132, so as to reduce the thermal impact on the battery cell 20, thereby improving the service performance of the battery 10.

In some implementations, as shown in FIG. 6, the protective component 15 is located inside the first through hole 132. In this way, through the provision that the protective component 15 is connected to the surface of the isolation component 14 facing away from the pressure relief mechanism 213, and that the protective component 15 is located inside the first through hole 132, the isolation component 14 can be protected to reduce the possibility of damage to the surface of the isolation component 14 facing away from the pressure relief mechanism 213 when subjected to vibration, impact, high temperature, or the like, to improve the service performance of the battery 10. Meanwhile, the structure has a simple design and is easy to install and disassemble.

FIG. 7 shows a partial schematic sectional view of a battery 10 according to another embodiment of the present application.

In some implementations, as shown in FIG. 7, the protective component 15 is adhered to the inner wall of the first through hole 132 to close the first through hole 132. As such, in the embodiments of the present application, through the provision that the protective component 15 is connected to the surface of the isolation component 14 facing away from the pressure relief mechanism 213, and that the protective component 15 is adhered to the inner wall of the first through hole 132 to close the first through hole 132, the possibility of damage to the surface of the isolation component 14 facing away from the pressure relief mechanism 213 when subjected to vibration, impact, high temperature, or the like can effectively be reduced, thereby improving the service performance of the battery 10.

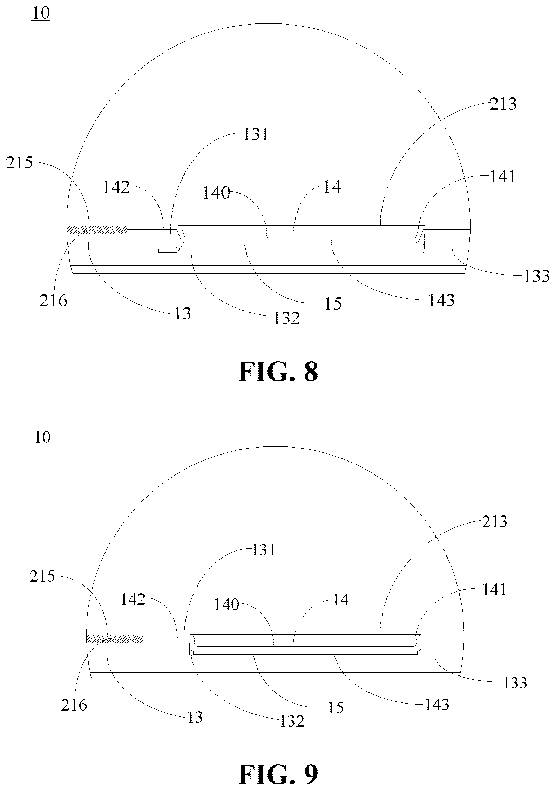

FIG. 8 shows a partial schematic sectional view of a battery 10 according to another embodiment of the present application.

In some implementations, as shown in FIG. 8, the protective component 15 is connected to the second surface 133 of the attachment component 13 facing away from the pressure relief mechanism 213 to close the first through hole 132.

In an embodiment of the present application, through the provision that the protective component 15 is connected to the surface of the isolation component 14 facing away from the pressure relief mechanism 213, and that the protective component 15 is connected to the second surface 133 of the attachment component 13 facing away from the pressure relief mechanism 213, the sealing of the first through hole 132 can be improved, to effectively reduce the possibility of damage to the surface of the isolation component 14 facing away from the pressure relief mechanism 213 when subjected to vibration, impact, high temperature, or the like, thereby improving the service performance of the battery 10.

In some implementations, the isolation component 14 and the protection component 15 are configured to be destructed by the emissions from the battery cell 20 when the pressure relief mechanism 213 is actuated, so that the emissions are allowed to pass through the isolation component 14 and the protection component 15. As such, in the embodiments of the present application, through the provision that the isolation component 14 and the protection component 15 are configured to be destructed by the emissions from the battery cell 20 when the pressure relief mechanism 213 is actuated so that the emissions are allowed to pass through the isolation component 14 and the protection component 15, during the actuation of the pressure relief mechanism 213, the emissions discharged by the pressure relief mechanism 213 can be smoothly discharged from the electrical cavity of the battery 10 through the isolation component 14 and the protective component 15, thereby reducing the thermal impact on the battery cell 20 and improving the service performance of the battery 10.

In some implementations, the melting point of the protective component 15 is higher than the melting point of the isolation component 14. As such, in the embodiments of the present application, through the provision that the protective component 15 is connected to the surface of the isolation component 14 facing away from the pressure relief mechanism 213, and that the melting point of the protective component 15 is set to be higher than the melting point of the isolation component 14, the possibility of damage to the surface of the isolation component 14 facing away from the pressure relief mechanism 213 when subjected to vibration, impact, high temperature, or the like can be reduced, thereby improving the service performance of the battery 10.

In some implementations, the protective component 15 is made of a material including one of the following materials: polypropylene, polycarbonate, polyethylene terephthalate, mica, glass fiber, ceramic fiber, polyethylene epoxy resin. Thus, in the embodiments of the present application, through the provision that the material of the protective component 15 is set to one of the following materials: polypropylene, polycarbonate, polyethylene terephthalate, mica, glass fiber, ceramic fiber, or polyethylene epoxy resin, the insulation performance, heat resistance and chemical stability of the protective component 15 can be improved, so as to effectively reduce the possibility of damage to the surface of the isolation component 14 facing away from the pressure relief mechanism 213 when subjected to vibration, impact, high temperature, or the like, thereby improving the service performance of the battery 10.

FIG. 9 shows a partial schematic sectional view of a battery 10 according to another embodiment of the present application.

In some implementations, as shown in FIG. 9, the isolation component 14 is adhered to the first surface 131. Thus, in the embodiments of the present application, through the provision that the isolation component 14 is adhered to the first surface 131, the sealing of connection between the isolation component 14 and the attachment component 13 can be effectively improved, to reduce the impact of the adhesive 216 entering the first through hole 132 on the actuation performance of the pressure relief mechanism 213, thereby improving the service performance of the battery 10.

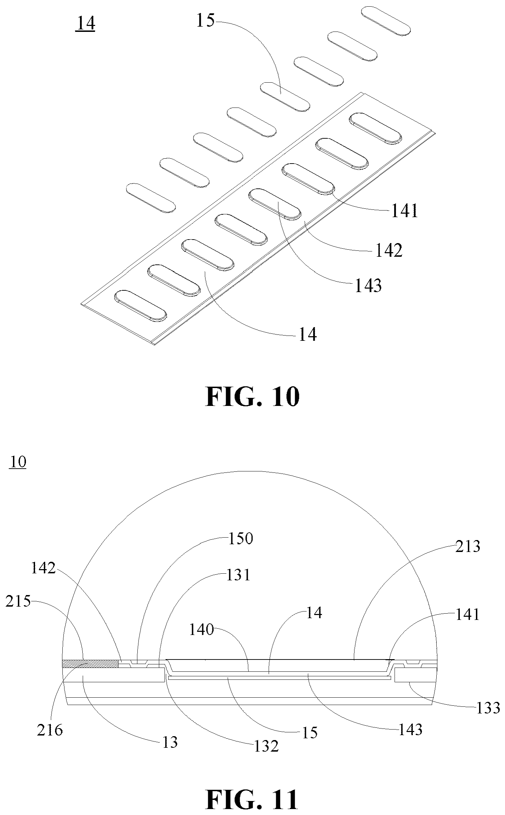

FIG. 10 shows a schematic structural view of an isolation component 14 according to an embodiment of the present application.

In some implementations, as shown in FIGS. 8 to 10, the isolation component 14 is embedded in the first through hole 132, or the isolation component 14 is adhered to the inner wall of the first through hole 132.

In the embodiments of the present application, through the provision that the isolation component 14 is embedded in the first through hole 132, or the isolation component 14 is adhered to the inner wall of the first through hole 132, the impact of the adhesive 216 entering the first through hole 132 on the actuation performance of the pressure relief mechanism 213 can be effectively reduced, thereby improving the service performance of the battery 10.

In some implementations, as shown in FIGS. 6 to 10, the isolation component 14 is provided with a first groove 140 opening toward the battery cell 20, at least a part of a side wall 141 of the first groove 140 is located in the first through hole 132, and an outer edge 142 of the first groove 140 is connected to the side wall 141 and is arranged between the first surface 131 and the first wall 215.

In an embodiment of the present application, through the provision that the isolation component 14 is provided with a first groove 140 opening toward the battery cell 20, at least a part of a side wall 141 of the first groove 140 is located in the first through hole 132, and an outer edge 142 of the first groove 140 is connected to the side wall 141 and is arranged between the first surface 131 and the first wall 215, in the case where the attachment component 13 is configured to be attached to the first wall 215 by an adhesive 216, the adhesive 216 can be effectively prevented from being applied between the attachment component 13 and the pressure relief mechanism 213, and the impact of the adhesive 216 entering the pressure relief mechanism 213 on the actuation performance of the pressure relief mechanism 213 can be effectively reduced, thereby improving the service performance of the battery 10.

In some implementations, in a plane perpendicular to the thickness direction of the bottom wall 143 of the first groove 140, the projection of the protective component 15 covers the projection of the bottom wall 143 of the first groove 140.

It should be understood that in the embodiments of the present application, the shape of the bottom wall 143 of the first groove 140 can be set according to actual needs. For example, the shape of the bottom wall 143 of the first groove 140 can be set according to the shape of the first through hole 132 or the shape of the pressure relief mechanism 213 of the battery cell 20. By way of example, the shape of the bottom wall 143 of the first groove 140 includes but is not limited to a circle, an ellipse, a rectangle and a regular polygon.

It should be understood that in the embodiments of the present application, the projection of the protective component 15 or the bottom wall 143 of the first groove 140 in a plane perpendicular to the thickness direction of the bottom wall 143 of the first groove 140 may be an orthographic projection in the thickness direction, or the projection of the protective component 15 or the bottom wall 143 of the first groove 140 in a plane perpendicular to the thickness direction of the bottom wall 143 of the first groove 140 may alternatively be a projection in other directions.

In the embodiments of the present application, through the provision that in a plane perpendicular to the thickness direction of the bottom wall 143 of the first groove 140, the projection of the protective component 15 covers the projection of the bottom wall 143 of the first groove 140, the possibility of damage to the surface of the isolation component 14 facing away from the pressure relief mechanism 213 when subjected to vibration, impact, high temperature, or the like can be effectively reduced, thereby improving the service performance of the battery 10.

FIG. 11 shows a partial schematic sectional view of a battery 10 according to another embodiment of the present application.

In some implementations, as shown in FIG. 11, a surface of an outer edge 142 of the first groove 140 close to the first wall 215 is provided with a second groove 150 opening toward the battery cell 20.

It should be understood that in the embodiments of the present application, the shape of the bottom wall of the second groove 150 can be set according to actual needs. By way of example, the shape of the bottom wall of the second groove 150 includes but is not limited to a circle, an ellipse, a rectangle, and a regular polygon.

In the embodiments of the present application, through the provision that a surface of an outer edge 142 of the first groove 140 close to the first wall 215 is provided with a second groove 150 opening toward the battery cell 20, to form a sealed cavity between the isolation component 14 and the first wall 215 in the case where the isolation component 14 is attached to the first wall 215, the sealing between the isolation component 14 and the battery cell 20 is improved and the risk of the adhesive 216 flowing from the gap between the isolation component 14 and the first wall 215 into the pressure relief mechanism 213 is reduced, thereby reducing the impact on the actuation performance of the pressure relief mechanism 213 and further improving the service performance of the battery 10.

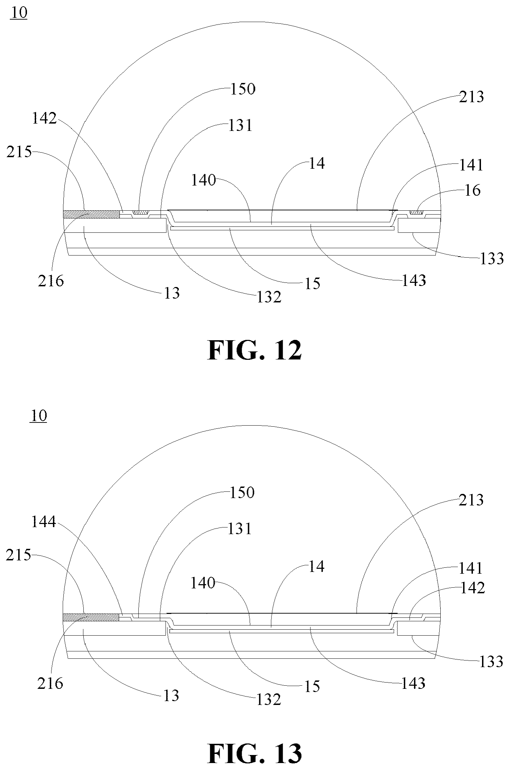

FIG. 12 shows a partial schematic sectional view of a battery 10 according to another embodiment of the present application.

In some implementations, as shown in FIG. 12, the battery 10 further includes a seal 16 provided between an outer edge 142 of the first groove 140 and the first wall 215, and at least a part of the seal 16 is received in the second groove 150.

It should be understood that in the embodiments of the present application, the shape of the seal 16 can be set according to actual needs. By way of example, the shape of the seal 16 is set according to the shape of the second groove 150. For example, in a section perpendicular to the thickness direction of the bottom wall of the second groove 150, the shape of the seal 16 includes but is not limited to an annulus, a circle, an ellipse, a square, and a regular polygon. As another example, in a section perpendicular to the height direction of the box 11, when the shape of the second groove 150 is an annulus, the shape of the seal 16 in the embodiments of the present application may be an annular structure that matches the shape of the second groove 150.

It should also be understood that in the embodiments of the present application, the shape of the seal 16 includes but is not limited to rubber, polytetrafluoroethylene, polyethylene, polypropylene, and polyurethane.

In the embodiments of the present application, through the provision that a seal 16 is provided between an outer edge 142 of the first groove 140 and the first wall 215, and that at least a part of the seal 16 is received in the second groove 150, the sealing between the isolation component 14 and the battery cell 20 can be further improved and the risk of the adhesive 216 flowing from the gap between the isolation component 14 and the first wall 215 into the pressure relief mechanism 213 can be effectively reduced, thereby reducing the impact on the actuation performance of the pressure relief mechanism 213 and further improving the service performance of the battery 10.

FIG. 13 shows a partial schematic sectional view of a battery 10 according to another embodiment of the present application.

In some implementations, as shown in FIG. 13, a protrusion 144 is provided on an outer edge 142 of the first groove 140, the protrusion 144 protrudes from the first surface 131 and is arranged around the pressure relief mechanism 213, and the protrusion 144 is used to prevent the adhesive 216 from being applied between the attachment component 13 and the pressure relief mechanism 213.

It should be understood that in the embodiments of the present application, the expression that the protrusion 144 protrudes from the first surface 131 and is arranged around the pressure relief mechanism 213 means that the protrusion 144 can protrude in the direction of the battery cell 20 or in the direction of the first wall 215 of the battery cell 20 to reduce the risk of the adhesive between the attachment component 13 and the first wall 215 of the battery cell 20 flowing to the pressure relief mechanism 213 through the gap between the isolation component 14 and the first wall 215.

It should also be understood that in the embodiments of the present application, the shape of the protrusion 144 can be set according to actual needs to prevent the adhesive from flowing to the pressure relief mechanism 213 through the gap between the isolation component 14 and the first wall 215. By way of example, the shape of the protrusion 144 may be an annular structure protruding toward the first wall 215, and the annular structure is arranged around the pressure relief mechanism 213.

In the embodiments of the present application, through the provision that a protrusion 144 is provided on an outer edge 142 of the first groove 140, the protrusion 144 protrudes from the first surface 131 and is arranged around the pressure relief mechanism 213, and the protrusion 144 is used to prevent the adhesive 216 from being applied between the attachment component 13 and the pressure relief mechanism 213, the risk of the adhesive 216 flowing from the gap between the isolation component 14 and the first wall 215 into the pressure relief mechanism 213 can be reduced, thereby reducing the impact on the actuation performance of the pressure relief mechanism 213 and further improving the service performance of the battery 10.

In some possible implementations, the bottom wall 143 of the first groove 140 is provided with a weak region configured to be destructed by the emissions from the battery cell 20 when the pressure relief mechanism 213 is actuated, so that the emissions are allowed to pass through the weak region.

It should be understood that in the embodiments of the present application, at least a part of the bottom wall 143 of the first groove 140 can be provided as a weak region so that it can be destructed by the emissions when the pressure relief mechanism 213 is actuated, so that the emissions are allowed to pass through the weak region.

It should also be understood that in the embodiments of the present application, in the direction perpendicular to the thickness of the bottom wall 143 of the first groove 140, the shape of the weak region can be set according to actual needs. For example, the shape of the weak region can be set according to the shape of the pressure relief mechanism 213 of the battery cell 20. By way of example, the shape of the weak region includes but is not limited to a circle, an ellipse, a rectangle, and a regular polygon.

It should also be understood that the number of the weak regions provided on the bottom wall 143 of the first groove 140 can be set according to actual needs. For example, the number of the weak regions may be one or more.

In the embodiments of the present application, through the provision that the bottom wall 143 of the first groove 140 is provided with a weak region configured to be destructed by the emissions when the pressure relief mechanism 213 is actuated, that is, when the internal pressure or temperature of the battery cell 20 reaches a threshold, the emissions can quickly pass through the weak region in time to realize rapid pressure relief of the battery cell 20, the impact on the actuation performance of the pressure relief mechanism 213 caused by the accumulation of the emissions in the first groove 140 can be reduced, thereby improving the service performance of the battery 10.

In some implementations, the weak region satisfies at least one of the following conditions: the melting point of the material of the weak region is lower than the melting point of the material of the rest of the bottom wall 143 of the first groove 140; the thickness of the weak region is smaller than the thickness of the rest of the bottom wall 143 of the first groove 140; and the surface of the weak region perpendicular to the thickness direction of the bottom wall 143 of the first groove 140 is provided with a score.

It should be understood that in the embodiments of the present application, the melting point of the material at the weak region can be set to be lower than or equal to a preset threshold, so that when the pressure relief mechanism 213 is actuated, the weak region can be more easily melted by the emissions discharged through the pressure relief mechanism 213 than the rest of the bottom wall 143 of the first groove 140. Secondly, the thickness of the weak region can also be set to be smaller than the thickness of the rest of the bottom wall 143 of the first groove 140. Since the weak region is thinner than the rest of the bottom wall 143 of the first groove 140, when the pressure relief mechanism 213 is actuated, the weak region can be more easily destructed by the emissions discharged through the pressure relief mechanism 213 than the rest of the bottom wall 143 of the first groove 140.

It should also be understood that in the embodiments of the present application, the shape of the score provided on the surface of the weak region perpendicular to the thickness direction of the bottom wall 143 of the first groove 140 can be set according to actual needs. By way of example, the score includes but is not limited to a cross-shaped score, an asterisk-shaped score, and an I-shaped score.

In the embodiments of the present application, through the provision that the weak region satisfies at least one of the following conditions: the melting point of the material of the weak region is lower than the melting point of the material of the rest of the bottom wall 143 of the first groove 140; the thickness of the weak region is smaller than the thickness of the rest of the bottom wall 143 of the first groove 140; and the surface of the weak region perpendicular to the thickness direction of the bottom wall 143 of the first groove 140 is provided with a score, the weak region can be more easily destructed by the emissions of the battery cell 20 than the rest of the bottom wall 143 of the first groove 140, and when the internal pressure or temperature of the battery cell 20 reaches a threshold, the emissions can quickly pass through the weak region in time to realize rapid pressure relief of the battery cell 20, the impact on the actuation performance of the pressure relief mechanism 213 caused by the accumulation of the emissions in the first groove 140 can be reduced, thereby improving the service performance of the battery10.

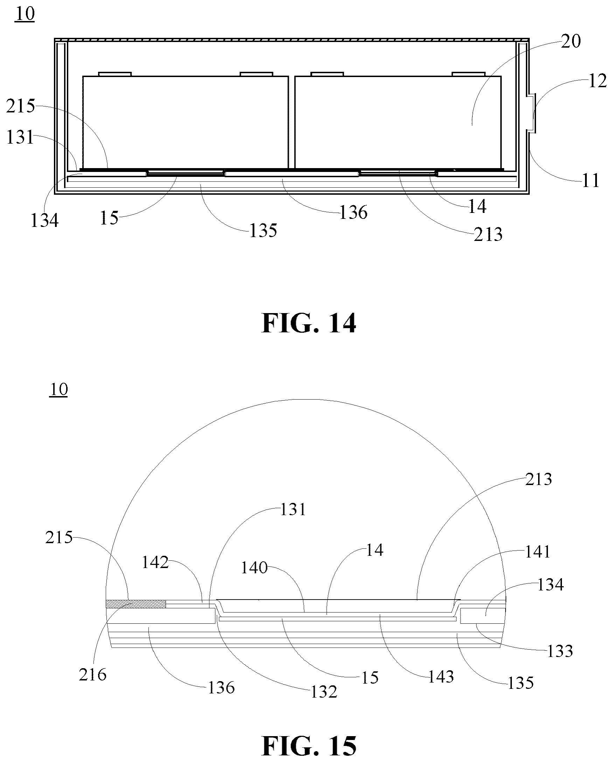

FIG. 14 shows a schematic sectional view of a battery 10 according to another embodiment of the present application. FIG. 15 shows a partial schematic sectional view of a battery 10 according to another embodiment of the present application. By way of example, FIG. 15 may be an enlarged schematic sectional view of a corresponding portion of the battery 10 in FIG. 14.

In some implementations, the attachment component 13 includes a first attachment component 134 and a second attachment component 135 connected to each other, and a hollow inner cavity 136 is formed between the first attachment component 134 and the second attachment component 135.

It should be understood that in the embodiments of the present application, the average distance between the first attachment component 134 and the second attachment component 135 can be set according to actual needs to guarantee the structural strength of the battery 10. It should also be understood, in the embodiments of the present application, the battery 10 further includes a plurality of other attachment components, such as a third attachment component, which can be arranged on the side of the second attachment component 135 away from the pressure relief mechanism 213 of the battery 10, or the third attachment component can be arranged between the first attachment component 134 and the second attachment component 135.

In the embodiments of the present application, through the provision that the attachment component 13 includes a first attachment component 134 and a second attachment component 135 connected to each other, and a hollow inner cavity 136 is formed between the first attachment component 134 and the second attachment component 135, the structural strength and impact resistance of the battery 10 can be improved, thereby improving the service performance of the battery 10.

In some implementations, the hollow inner cavity 136 is used to accommodate a fluid to regulate the temperature of the battery cell 20. As such, in the embodiments of the present application, through the provision that the hollow inner cavity 136 formed between the first attachment component 134 and the second attachment component 135 is used to accommodate a fluid to regulate the temperature of the battery cell 20, the risk of thermal runaway of the battery cell 20 can be reduced, thereby improving the service performance of the battery 10.

Referring again to FIGS. 4 to 6, 10, 14, and 15 above, there is provided a battery 10 which includes a battery cell 20, an attachment component 13, an isolation component 14 and a protective component 15. A first wall 215 of the battery cell 20 is provided with a pressure relief mechanism 213, a first surface 131 of the attachment component 13 is attached to the first wall 215 by an adhesive 216, the isolation component 14 is connected to the attachment component 13 and configured to prevent the adhesive 216 from being applied between the attachment component 13 and the pressure relief mechanism 213, and the protective component 15 is connected to a surface of the isolation component 14 facing away from the pressure relief mechanism 213 to protect the isolation component 14. The attachment component 13 is provided with a first through hole 132 corresponding to the position of the pressure relief mechanism 213. Specifically, the protective component 15 is located inside the first through hole 132, the isolation component 14 is provided with a first groove 140 opening toward the battery cell 20, at least a part of a side wall 141 of the first groove 140 is located in the first through hole 132, and an outer edge 142 of the first groove 140 is connected to the side wall 141 and is arranged between the first surface 131 and the first wall 215. In a plane perpendicular to the thickness direction of the bottom wall 143 of the first groove 140, the projection of the protective component 15 covers the projection of the bottom wall 143 of the first groove 140. The attachment member 13 includes a first attachment component 134 and a second attachment component 135 connected to each other. A hollow inner cavity 136 is formed between the first attachment component 134 and the second attachment component 135. The hollow inner cavity 136 is used to accommodate a fluid to regulate the temperature of the battery cell 20.

An embodiment of the present application further provides an electrical device including the battery 10 in any of the aforementioned embodiments, and the battery 10 is used to supply electric energy to the electrical device. Specifically, the electrical device may be a vehicle 1 as shown in FIG. 1 above or any electrical device utilizing the battery 10.

An embodiment of the present application further provides an energy storage device including the battery 10 in any of the aforementioned embodiments, and the battery 10 is used to store electric energy for the energy storage device.

While the present application has been described with reference to the above embodiments, various modifications may be made and components therein may be replaced with equivalents without departing from the scope of the embodiments of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery, comprising:
a battery cell (20), a first wall (215) of the battery cell (20) being provided with a pressure relief mechanism (213);
an attachment component (13), a first surface (131) of the attachment component (13) being attached to the first wall (215) via an adhesive (216);
an isolation component (14) connected to the attachment component (13) and configured to prevent the adhesive (216) from being applied between the attachment component (13) and the pressure relief mechanism (213); and
a protective component (15) connected to a surface of the isolation component (14) facing away from the pressure relief mechanism (213) to protect the isolation component (14);
wherein the attachment component (13) is provided with a first through hole (132) corresponding to the position of the pressure relief mechanism (213).

2. The battery according to claim 1, wherein the protective component (15) is located inside the first through hole (132).

3. The battery according to claim 1 or 2, wherein the protective component (15) is adhered to an inner wall of the first through hole (132) to close the first through hole (132).

4. The battery according to any one of claims 1 to 3, wherein the protective component (15) is connected to a second surface (133) of the attachment component (13) facing away from the pressure relief mechanism to close the first through hole (132).

5. The battery according to any one of claims 1 to 4, wherein the isolation component (14) and the protective component (15) are configured to be destructed by emissions from the battery cell (20) when the pressure relief mechanism (213) is actuated, so that the emissions are allowed to pass through the isolation component (14) and the protective component (15).

6. The battery according to any one of claims 1 to 5, wherein the melting point of the protective component (15) is higher than the melting point of the isolation component (14).

7. The battery according to any one of claims 1 to 6, wherein the protective component (15) is made of at least one of the following materials: polypropylene, polycarbonate, polyethylene terephthalate, mica, glass fiber, ceramic fiber, and polyethylene epoxy resin.

8. The battery according to any one of claims 1 to 7, wherein the isolation component (14) is adhered to the first surface (131).

9. The battery according to any one of claims 1 to 8, wherein the isolation component (14) is embedded in the first through hole (132), or the isolation component (14) is adhered to the inner wall of the first through hole (132).

10. The battery according to any one of claims 1 to 9, wherein the isolation component (14) is provided with a first groove (140) opening toward the battery cell (20), at least part of a side wall (141) of the first groove (140) is located in the first through hole (132), and an outer edge (142) of the first groove (140) is connected to the side wall (141) and is arranged between the first surface (131) and the first wall (215).

11. The battery according to claim 10, wherein in a plane perpendicular to the thickness direction of a bottom wall (143) of the first groove (140), the projection of the protective component (15) covers the projection of the bottom wall (143) of the first groove (140).

12. The battery according to claim 10 or 11, wherein a surface of the outer edge (142) of the first groove (140) close to the first wall (215) is provided with a second groove (150) opening toward the battery cell (20).

13. The battery according to claim 12, further comprising a seal (16) provided between the outer edge (142) of the first groove (140) and the first wall (215), wherein at least part of the seal (16) is received in the second groove (150).

14. The battery according to any one of claims 10 to 13, wherein a protrusion (144) is provided on the outer edge (142) of the first groove (140), the protrusion (144) protrudes from the first surface (131) and is arranged around the pressure relief mechanism (213), and the protrusion (144) is used to prevent the adhesive (216) from being applied between the attachment component (13) and the pressure relief mechanism (213).

15. The battery according to any one of claims 10 to 14, wherein the bottom ball (143) of the first groove (140) is provided with a weak region, and the weak region is configured to be destructed by the emissions from the battery cell when the pressure relief mechanism (213) is actuated, so that the emissions are allowed to pass through the weak region.

16. The battery according to claim 15, wherein the weak region satisfies at least one of the following conditions:
the melting point of the material of the weak region is lower than the melting point of the material of the rest of the bottom wall (143) of the first groove (140);
the thickness of the weak region is smaller than the thickness of the rest of the bottom wall (143) of the first groove (140); and
a score is provided on a surface of the weak region perpendicular to the thickness direction of the bottom wall (143) of the first groove (140).

17. The battery according to any one of claims 1 to 16, wherein the attachment component (13) comprises a first attachment component (134) and a second attachment component (135) connected to each other, and a hollow inner cavity (136) is formed between the first attachment component (134) and the second attachment component (135).

18. The battery according to claim 17, wherein the hollow inner cavity (136) is used to contain a fluid to regulate the temperature of the battery cell (20).

19. An electrical device, comprising the battery of any one of claims 1 to 18, the battery being used to supply electric energy to the electrical device.

20. An energy storage device, comprising the battery of any one of claims 1 to 18, the battery being used to store electric energy for the energy storage device.
